Europäisches Patentamt

European Patent Office

Office européen des brevets

(11) Publication number: **0 050 138**
**B1**

# EUROPEAN PATENT SPECIFICATION

(45) Date of publication of patent specification: 20.02.85

(51) Int. Cl.⁴: **F 41 J 5/02**

(21) Application number: **81901106.5**

(22) Date of filing: **09.04.81**

(86) International application number:
**PCT/US81/00478**

(87) International publication number:
**WO 81/03066 29.10.81 Gazette 81/25**

(54) **RADIATION DETECTOR.**

(30) Priority: **14.04.80 US 140316**

(43) Date of publication of application:
**28.04.82 Bulletin 82/17**

(45) Publication of the grant of the patent:
**20.02.85 Bulletin 85/08**

(84) Designated Contracting States:
**CH DE FR GB LI SE**

(56) References cited:
**DE-B-1 235 021**
**DE-B-2 746 800**
**US-A-2 638 554**
**US-A-3 308 709**
**US-A-3 387 909**
**US-A-3 452 453**
**US-A-3 487 223**
**US-A-3 633 285**
**US-A-3 736 217**
**US-A-4 138 193**
**US-A-4 172 631**
**US-A-4 196 962**

(73) Proprietor: **Litton Systems, Inc.**
**360 North Crescent Drive**
**Beverly Hills California 90210 (US)**

(72) Inventor: **BENCKERT, Willis J.**
**1719 South Wymore Road**
**Altamonte Springs, FL 32701 (US)**
Inventor: **WANGLER, Richard J.**
**2450 Derbyshire Road**
**Maitland, FL 32751 (US)**

(74) Representative: **Finck, Dieter et al**
**Patentanwälte v. Füner, Ebbinghaus, Finck**
**Mariahilfplatz 2 & 3**
**D-8000 München 90 (DE)**

(56) References cited:
**VOCABULARY FOR FIBER OPTICS AND**
**LIGHTWAVE COMMUNICATIONS, 1981,**
**Information Gatekeepers Inc. BROOKLINE (US)**
**page 110**

Courier Press, Leamington Spa, England.

## Description

The invention relates to a radiation detector comprising support means, radiation detector means and a plurality of fiber optic fibers mounted on the support means, the one end of each fiber being operatively connected to the radiation detector means.

Such a radiation detector, which is used as a target for detecting a laser beam from a simulated weapon is known from the DE—B—27 46 800. The radiation detector comprises a lot a retro-reflectors, distributed over a support means and fixed thereto. Each retro-reflector is connected with the one end of an optical fiber, the other end of which is connected to a central light detector means. Such a detector is very expensive, as a plurality of retro-reflectors is to be arranged with narrow distances, reflecting and collecting light to be guided along the optical fiber to secure display, if the target is hit by the laser beam.

Prior art fiber optics, especially those made of polymer material have a "fault" which causes a relatively large loss in transmission of radiation, but which makes it possible to couple radiation laterally into the fibers allowing it to be transmitted into an optical detector at the fiber ends. The materials' have a characteristic called "haze" which is the presence of very small scattering centers which produces what is referred to as the Rayleigh scattering phenomenon. If an optical radiation enters laterally into a cylindrical fiber optic fiber and intersects a scattering center, a scattering pattern of various scattered radiation is produced. Normally, radiation entering a cylindrical fiber from the side would be refracted into the fiber and theoretically be refracted out of the other side of the fiber. If, however, the radiation encounters a scattering center, some of the radiation will be deflected at fairly large angles. Thus, most of the radiation scattered from a radiation center from direct laser radiation will be at such large angles to the fiber axis that no appreciable radiation will be at sufficiently large angle of incidence to the fiber walls to be trapped by the total internal reflection of the fiber.

The object of the invention is to provide a radiation detector of the above described type, which allows secure detecting or radiation under use of very simple means.

This aim is obtained with a radiation detector of the above-mentioned type, which uses polymer fibers as fiber optic fibers and a radiation scattering cover, which is associated with each fiber on a lateral portion exposed to radiation.

The scattering cover of the radiation detector according to the invention is a first deflecting means, which increases the angle of incidence of a part of the incident radiation onto the optical fiber surface and into the optical fibers. Inside the optical fibers, which consist of a polymer material, the Rayleigh scattering phenomenon still further reduces the loss of the radiation to be transmitted to the detector at the fiber ends.

The effect of the radiation detector according to the invention can be enhanced, if both ends of the fiber optic fibers are operatively connected to the radiation detector means.

The radiation scattering cover may consist of a flexible cloth material attached over the plurality of fiber optic fibers to the support means. The cloth material can be synthetic material. A flexible cloth can be used as support means. Thus, the support means and the radiation scattering cover can be stitched together along the fiber optic fibers to hold them in place.

Usually, the radiation detector means is a photodiode. The radiation detector means generates an electrical signal, which can be amplified by an amplifier.

To protect the fiber from abrasion, it may be located inside a transparent polymer tube.

The plurality of fiber optic fibers can be spaced a predetermined distance based upon the size of a beam of radiation used in conjunction thereiwth and the distance anticipated between a radiation source and a target. Further, the plurality of fiber optic fibers may be divided into sectors and the radiation detector means may include a plurality of radiation detectors coupled to each section of the plurality of fiber optic fibers.

Other objects, features and advantages of the present invention will be apparent from the following description, referring to drawings, in which

Fig. 1 is an elevation of a portion of a fiber optic fiber with a scatter diagram in accordance with the invention,

Fig. 2 is a plan view of a target in accordance with the invention,

Fig. 3 is a sectional view taking on the line 4—4 of Fig. 3 and

Fig. 4 is a sectional view taken through one fiber showing an alternate embodiment.

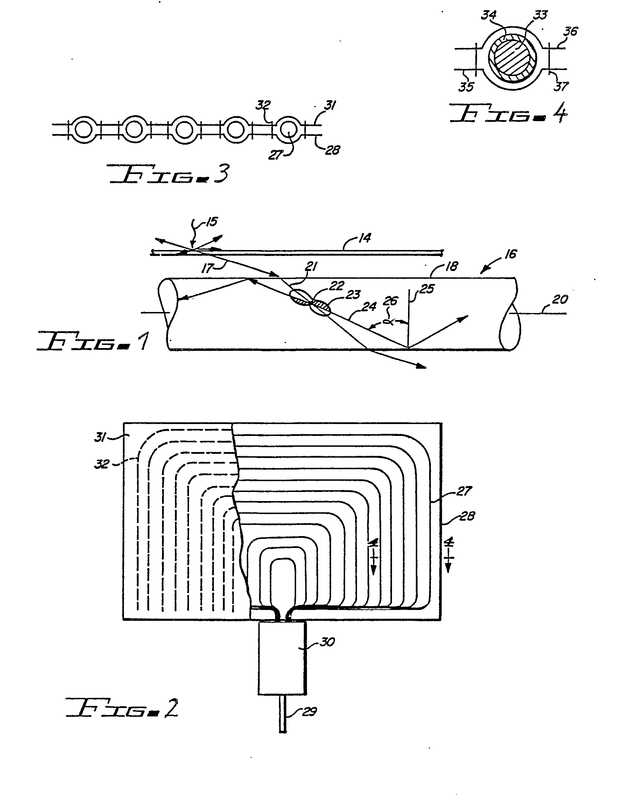

As shown in Fig. 1, a fiber 16 is partially surrounded by a powerful scattering medium 14, such as a porous cloth or a plastic tube 14.

A laser radiation 15 entering the side of a fiber optic fiber 16 will first encounter the scattering medium 14 which produces scattered radiation 17 entering the side 18 of the fiber optic fiber 16 at a substantially inclined angle to the fiber axis 20. The scattering medium 14 is called a "Mie" scatterer which scatters the radiation in all directions. The scattered radiation 17 entering the fiber 16, is refracted as shown by the line 21 and if it then intersects a Rayleigh scattering center 22, a scattering pattern 23 is formed producing scattered radiation at a variety of angles as indicated by the radiation lines 24 which has an incident angle from an imaginary line 25 perpendicular to the axis 20 within the critical angle of incidence required to trap the radiation within the fiber 16 walls by the internal reflection of the fiber and thus be conducted to a detector at the end of the fiber 16. The critical angle of incidence is indicated at 26 between the scattered radiation 24 and the line 25 which is normal to the fiber wall.

A plurality of fiber optic loops 27, as illustrated in Figures 2 and 3, are mounted on a base 28 which can be cloth, such as denim cloth, but can be any material desired, such as wood or metal or the target itself to support the fibers 27 in a predetermined pattern. The fibers laid out in the pattern 27 have both of their ends feeding into a detector and detector amplifier 30 and are covered with a scattering medium 31 which can be any porous cloth, paper or plastic, or the like, such as might be made of a nylon cheesecloth material or any other synthetic or real fiber which normally diffuses the radiation to produce scattering. As illustrated in Figure 3, the fibers 27 have the base 28 covered by the scattering medium 31 which is stitched with stitches 32 or otherwise held in place on the base where the base 28 is a cloth or garment material, thereby providing a flexible target which holds the fibers 27 in position. A laser beam impinging upon the scattering medium 31 will thus produce a scattered radiation entering the fibers 27 as indicated in Figure 2, which when intersecting a scattering center (Figure 1) will further scatter the radiation at angles which will allow the radiation to be trapped within the fibers 27 and directed into the detector 30 where a detector such as a photodiode detects a sudden increase in energy, such as produced by a laser beam hitting the cloth 31. A power and signal cable 29 is connected to the detector 30 to power the detector and to feed the signals from the detector. As can be seen at this point, Figure 2 can be utilized as a target by mounting in a personnel jacket or on a vehicle or the like, and will given an indication over a large area indicating that a hit has been made on the target. The spacing of the fibers depends upon the size of the beam and the distance from the target. The beam would have to impinge directly over or adjacent at least one fiber. The target itself can be used as the support for the fibers with the fibers attached directly to the target and where support is used herein it is meant to include mounting the fibers directly on a target without departing from the spirit and scope of the invention.

Figure 4 shows an alternate embodiment in which a fiber optic fiber 33 is surrounded by a transparent plastic tube 34, such as a polytrifluoro-chloroethylene tube, to protect the fiber from abrasion. The tube 34 is mounted to a base 35 and is covered with a scattering medium 36 with the base 35 and scattering medium 36 stitched with stitches 37 or otherwise attached to hold the scattering medium in close proximity to the fiber and protective tubing.

## Claims

1. Radiation detector comprising support means (28), radiation detector means (30) and a plurality of fiber optic fibers (16, 33) mounted in a spaced relationship on support means (28), the one end of each fiber (16, 33) being operatively connected to the radiation detector means (30), characterized in that the fiber optic fibers (16, 33) are polymer fibers and in that a radiation scattering cover (14, 31) is associated with each fiber (16, 33) on a lateral portion exposed to radiation.

2. Radiation detector in accordance with Claim 1, characterized in that both ends of the fiber optic fibers (16, 33) are operatively connected to the radiation detector means (30).

3. Radiation detector in accordance with Claim 1 or 2, characterized in that the radiation scattering cover (14, 31) is a flexible cloth material attached over the plurality of fiber optic fibers (16, 33) to the support means (28).

4. Radiation detector in accordance with Claim 3, characterized in that the radiation scattering cover (14, 31) is a synthetic cloth material.

5. Radiation detector in accordance with Claim 4, characterized in that the support means (28) is flexible cloth.

6. Radiation detector in accordance with Claim 5, characterized in that the support means (28) and the radiation scattering cover (14, 31) are stitched together along the fiber optic fibers (16, 33) to hold them in place.

7. Radiation detector in accordance with one of the Claims 1 to 6, characterized in that the radiation detector means (30) is a photodiode.

8. Radiation detector in accordance with Claim 7, characterized in that the radiation detector means (30) generates an electrical signal and an amplifier amplifies the generated signal.

9. Radiation detector in accordance with one of the Claims 1 to 8, characterized in that each fiber optic fiber (33) is located inside a transparent polymer tube (34).

10. Radiation detector in accordance with one of the Claims 1 to 9, characterized in that the plurality of fiber optic fibers (16, 33) are spaced a predetermined distance based upon the size of a beam of radiation used in conjunction therewith and the distance anticipated between a radiation source and a target.

11. Radiation detector in accordance with one of the Claims 1 to 10, characterized in that the pluraltiy of fiber optic fibers (16, 33) are divided into sectors and the radiation detector means (30) includes a plurality of radiation detectors coupled to each section of the plurality of fiber optic fibers (16, 33).

## Revendications

1. Détecteur de radiation comprenant un moyen de support (28), un moyen détecteur de radiation (30) et une pluralité de fibres optiques (16, 33) montées de manière espacée sur le moyen de support (28), une extrémité de chaque fibre (16, 33) étant reliée de manière active au moyen détecteur de radiation (30), caractérisé en ce que les fibres optiques (16, 33) sont des fibres de polymère et en ce qu'un masque (14, 31) dispersant la radiation est associé à chaque fibre (16, 33) sur une partie latérale exposée à la radiation.

2. Détecteur de radiation selon la revendication 1, caractérisé en ce que les deux extrémités des fibres optiques (16, 33) sont reliées de manière active au moyen détecteur de radiation.

3. Détecteur de radiation selon la revendication 1 ou 2 caractérisé en ce que le masque (14, 31) dispersant la radiation est en une étoffe flexible attachée au moyen de support (28) de manière à recouvrir la pluralité de fibres optiques (16, 33).

4. Détecteur de radiation selon la revendication 3, caractérisé en ce que le masque (14, 31) dispersant la radiation est en une étoffe synthétique.

5. Détecteur de radiation selon la revendication 4 caractérisé en ce que le moyen de support (28) est constitué par une étoffe flexible.

6. Détecteur de radiation selon la revendication 5, caractérisé en ce que le moyen de support (28) et le masque (14, 31) dispersant la radiation sont cousus ensemble le long des fibres optiques (16, 33) pour les maintenir en place.

7. Détecteur de radiation selon l'une quelconque des revendications 1 à 6, caractérisé en ce que le moyen détecteur de radiation (30) est une photodiode.

8. Détecteur de radiation selon la revendication 7, caractérisé en ce que le moyen détecteur de radiation (30) engendre un signal électrique et en ce qu'un amplificateur amplifie le signal engendré.

9. Détecteur de radiation selon l'une des revendications 1 à 8, caractérisé en ce que chaque fibre optique (33) est située à l'intérieur d'un tube de polymère transparent (34).

10. Détecteur de radiation selon l'une des revendications 1 à 9, caractérisé en ce que les fibres optiques (16, 33) de la pluralité de fibres sont espacées d'une distance prédéterminée basée sur la dimension du faisceau de radiation utilisé en liaison avec elles et sur la distance prévue entre une source de radiation et une cible.

11. Détecteur de radiation selon l'une des revendications 1 à 10, caractérisé en ce que les fibres optiques (16, 33) de la pluralité de fibres sont divisées en secteurs et en ce que le moyen détecteur de radiation (30) comprend une pluralité de détecteurs de radiation couplés à chaque secteur de la pluralité de fibres optiques (16, 33).

**Patentansprüche**

1. Strahlungsdetektor mit einer Halteeinrichtung (28), mit einer Strahlungsdetektoreinrichtung (30) und mit einer Vielzahl von Faseroptikfasern (16, 33), die in einer Abstandsbeziehung an der Halteeinrichtung (28) angebracht sind, wobei das eine Ende jeder Faser (16, 33) wirkungsmäßig mit der Strahlungsdetektoreinrichtung (30) verbunden ist, dadurch gekennzeichnet, daß die Faseroptikfasern (16, 33) polymere Fasern sind und daß jeder Faser (16, 33) an einem seitlichen, der Strahlung ausgesetzten Abschnitt eine Strahlungsstreuabdeckung (14, 31) zugeordnet ist.

2. Strahlungsdetektor nach Anspruch 1, dadurch gekennzeichnet, daß beide Enden der Faseroptikfasern (16, 33) wirkungsmäßig mit der Strahlungsdetektoreinrichtung (30) verbunden sind.

3. Strahlungsdetektor nach Anspruch 1 oder 2, dadurch gekennzeichnet, daß die Strahlungsstreuabdeckung (14, 31) ein flexibles Tuchmaterial ist, das über der Vielzahl von Faseroptikfasern (16, 33) an der Halteeinrichtung (28) befestigt ist.

4. Strahlungsdetektor nach Anspruch 3, dadurch gekennzeichnet, daß die Strahlungsstreuabdeckung (14, 31) ein synthetisches Tuchmaterial ist.

5. Strahlungsdetektor nach Anspruch 4, dadurch gekennzeichnet, daß die Halteeinrichtung (28) ein flexibles Tuch ist.

6. Strahlungsdetektor nach Anspruch 5, dadurch gekennzeichnet, daß die Halteeinrichtung (28) und die Strahlungsstreuabdeckung (14, 31) längs der Faseroptikfasern (16, 33), um sie an Ort und Stelle zu halten, zusammengenäht sind.

7. Strahlungsdetektor nach einem der Ansprüche 1 bis 6, dadurch gekennzeichnet, daß die Strahlungsdetektoreinrichtung (30) eine Fotodiode ist.

8. Strahlungsdetektor nach Anspruch 7, dadurch gekennzeichnet, daß die Strahlungsdetektoreinrichtung (30) ein elektrisches Signal erzeugt und daß ein Verstärker das erzeugte Signal verstärkt.

9. Strahlungsdetektor nach einem der Ansprüche 1 bis 8, dadurch gekennzeichnet, daß jede Faseroptikfaser (33) innerhalb eines transparenten polymeren Rohrs (34) positioniert ist.

10. Strahlungsdetektor nach einem der Ansprüche 1 bis 9, dadurch gekennzeichnet, daß die Vielzahl der Faseroptikfasern (16, 33) in einem vorher festgelegten Abstand angeordnet sind, der auf der Größe eines Strahls der Strahlung, die in Verbindung damit verwendet wird, und dem Abstand basiert, der zwischen einer Strahlungsquelle und einem Ziel erwartet wird.

11. Strahlungsdetektor nach einem der Ansprüche 1 bis 10, dadurch gekennzeichnet, daß die Vielzahl der Faseroptikfasern (16, 33) in Sektoren unterteilt ist und daß die Strahlungsdetektoreinrichtung (30) eine Vielzahl von Strahlungsdetektoren aufweist, die mit jedem Abschnitt der Vielzahl von Faseroptikfasern (16, 33) gekoppelt sind.

FIG. 4

FIG. 3

FIG. 1

FIG. 2